# EUROPEAN PATENT APPLICATION

(11) **EP 4 213 523 A1**
(43) Date of publication of application: **19.07.2023**
(21) Application number: 21866949.7
(22) Date of filing: 07.06.2021
(51) Int. Cl.: H04W 12/37, H04W 12/50, H04W 76/10, H04W 80/10, H04W 88/04, H04W 92/18, H04W 92/10

(54) **METHOD FOR AGREEING TO SECURITY APPLICATION POLICY BETWEEN PC5 LINK AND UU LINK IN PROSE RELAY COMMUNICATION, AND DEVICE SUPPORTING SAME**

(30) Priority: 10.09.2020 KR 20200116260
(71) Applicant: LG Electronics Inc., Yeongdeungpo-Gu Seoul 07336 (KR)
(72) Inventor: KIM, Dongjoo, Seoul 06772 (KR); KIM, Hyunsook, Seoul 06772 (KR)
(74) Representative: Katérle, Axel
(86) International application number: PCT/KR2021/007054
(87) International publication number: WO 2022/055078

(57) **Abstract**

Provided are a method for agreeing to a security application policy between a PC5 link and a Uu link in proximity services (ProSe) relay communication, and a device supporting same. A first user equipment (UE) operating in a wireless communication system determines a security policy with a second UE through negotiation with the second UE, and transmits, to a network, a request related to a protocol data unit (PDU) session to be used for relaying between the UE and the network, wherein the security policy is associated with a unicast link. The request includes the security policy.

## Description

### TECHNICAL FIELD

The present disclosure relates to a method for agreeing to a security application policy between a PC5 link and a Uu link in a proximity services (ProSe) relay communication, and a device supporting the method.

### BACKGROUND

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Proximity services (ProSe) are services that can be provided by the 3GPP system based on UEs being in proximity to each other. The 3GPP system enablers for ProSe include the following functions.
- Direct discovery;
- Direct communication;
- UE-to-Network Relay.

### SUMMARY

The UE-to-Network Relay may effectively extend network coverage by relaying traffic between the network and a remote UE. While UE-to-Network Relay UE connects to the network using cellular communication technology, it communicates with the remote UE using UE-UE direct communication. At this time, the security policies applied between the UE-to-Network Relay UE and the network and the security policies applied between the UE-to-Network Relay UE and the remote UE may be inconsistent and may need to be resolved.

In an aspect, a method performed by a first user equipment (UE) operating in a wireless communication system is provided. The method comprises: determining a security policy associated with a unicast link in negotiation with a second UE, and transmitting, to the network, a request associated with a protocol data unit (PDU) session to be used for relaying between the second UE and the network. The request includes the security policy.

In another aspect, a method performed by a second user equipment (UE) operating in a wireless communication system is provided. The method comprises: determining a security policy associated with a unicast link in negotiation with a first UE, and communicating with a network using the first UE as a relay. The communication between the first UE and the network uses a PDU session based on the security policy.

In another aspect, an apparatus implementing the above method is provided.

The present disclosure can have various advantageous effects.

For example, in ProSe communication between a remote UE and a network via a UE-to-Network Relay UE, the same security policy is applied to both the PC5 unicast link and the Uu link, resulting in more secure communication.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 shows an example of 5G system architecture to which implementations of the present disclosure is applied.
FIG. 6 shows an example of a 5G system architecture for V2X communication to which implementations of the present disclosure is applied.
FIG. 7 shows an example of an architecture model using a ProSe 5G UE-to-Network Relay entity to which implementations of the present disclosure is applied.
FIG. 8 shows an example of a procedure for ProSe 5G UE-to-Network Relay to which implementations of the present disclosure is applied.
FIG. 9 shows an example of a method performed by a first UE to which implementations of the present disclosure is applied.
FIG. 10 shows an example of a method performed by a second UE to which implementations of the present disclosure is applied.
FIG. 11 shows an example of a method for applying a security policy for UE-to-Network Relay to which implementations of the present disclosure is applied.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

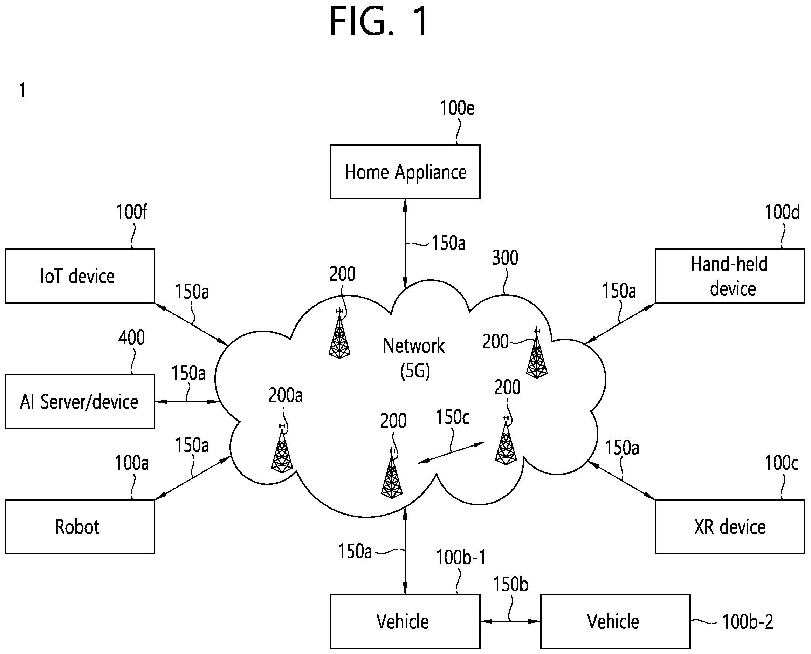

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

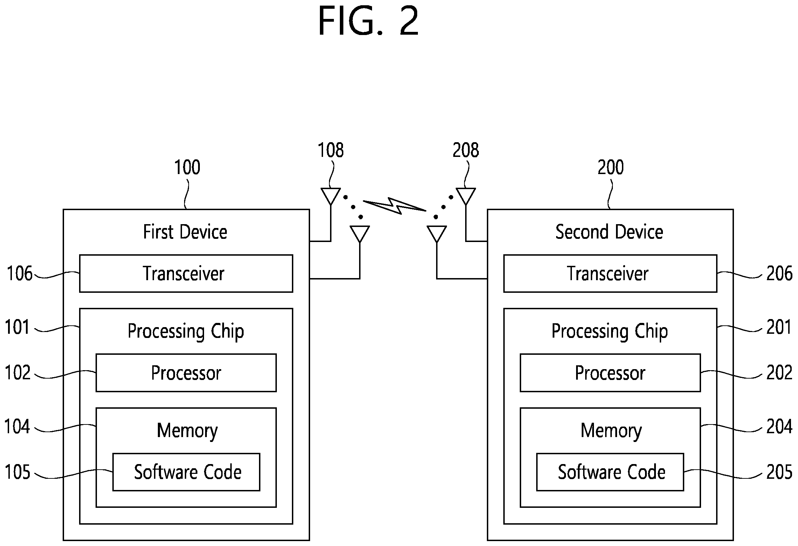

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be adapted to include the modules, procedures, or functions. Firmware or software adapted to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

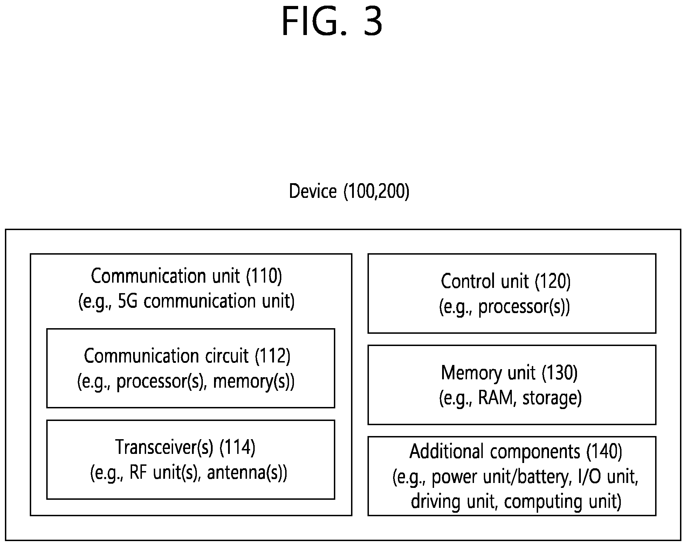

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a dynamic RAM (DRAM), a ROM, a flash memory, a volatile memory, a non-volatile memory, and/or a combination thereof.

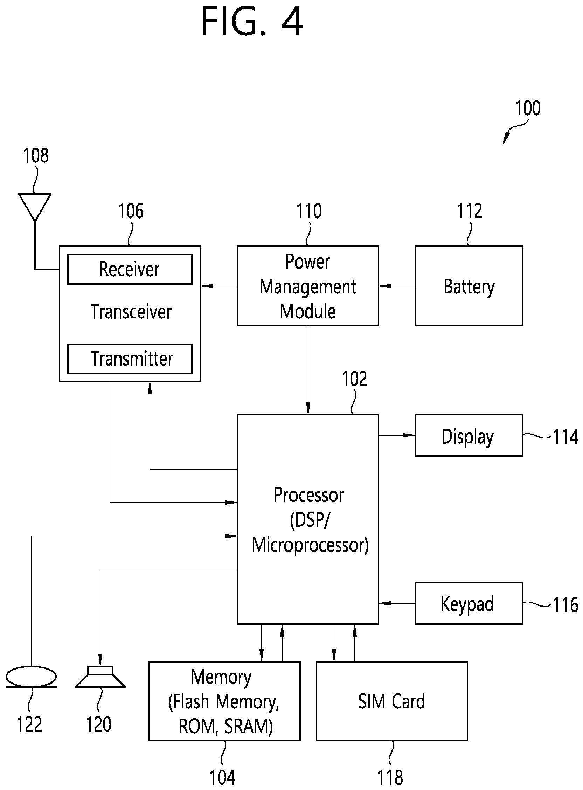

FIG. 4 shows an example of UE to which implementations of the present disclosure is applied.

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek°, ATOM^{™} series of processors made by Intel° or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

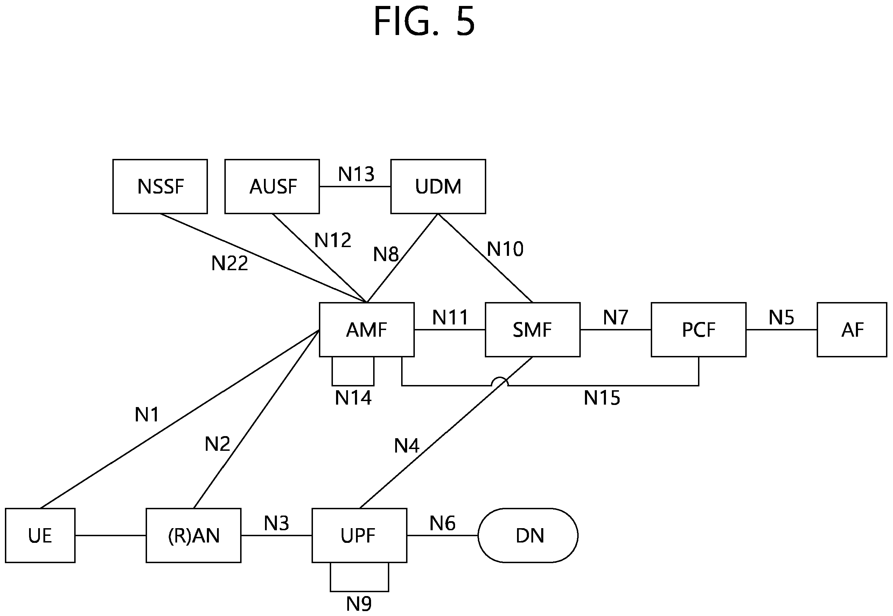

FIG. 5 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 5 depicts the 5G system architecture in the non-roaming case, using the reference point representation showing how various network functions interact with each other.

In FIG. 5, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 5. For clarity, the NWDAF and its connections with other NFs, e.g., PCF, are not depicted in FIG. 5.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

Vehicle-to-everything (V2X) communication is described. For V2X communication, the following definitions may be used.
- V2X application: An application using one or more V2X services (e.g., an active safety application in a vehicle, emergency warning, vehicle safety and awareness, etc.). A V2X application may operate towards a V2X Application Server.
- V2X communication: A communication to support V2X services leveraging Uu and/or PC5 reference points. V2X services are realized by various types of V2X applications, i.e., Vehicle-to-Vehicle (V2V), Vehicle-to-Pedestrian (V2P), Vehicle-to-Infrastructure (V2I) and Vehicle-to-Network (V2N).
- V2X message: A dedicated messaging type of V2X service (e.g., intelligent transport system (ITS) messages).
- V2X service: A data service, offered to V2X applications and optionally V2X Application Servers. A V2X service belongs to one V2X service type. A V2X service may be associated with one or more V2X applications, and a V2X application may be associated with one or more V2X services.
- V2X service type: A type of V2X service, which is identified by e.g., ITS Application Identifier (ITS-AID) or Provider Service Identifier (PSID).

There are two modes of operation for V2X communication, namely V2X communication over PC5 reference point and V2X communication over Uu reference point. These two operation modes may be used by a UE independently for transmission and reception.

V2X communications over PC5 reference point are supported by LTE and/or NR.

V2X communications over Uu reference point are supported by E-UTRA connected to 5GC and/or NR connected to 5GC. V2X communication over Uu reference point may be only be unicast.

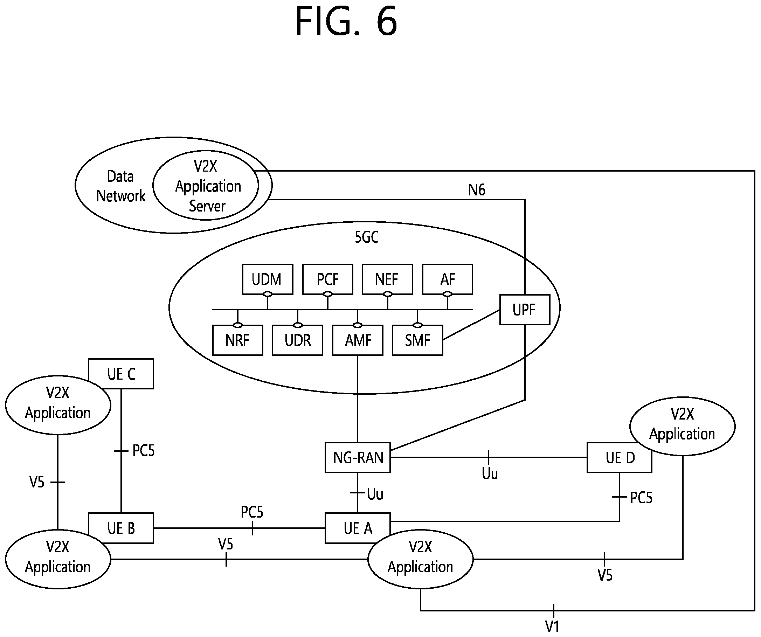

FIG. 6 shows an example of a 5G system architecture for V2X communication to which implementations of the present disclosure is applied.

Referring to FIG. 6, a 5G system architecture for V2X communication includes the following reference points.
- V1: The reference point between the V2X applications in the UE and in the V2X Application Server.
- V5: The reference point between the V2X applications in the UEs.
- PC5: The reference point between the UEs, and it includes the LTE based PC5 and/or NR based PC5.
- N1: In the case of V2X service, it is used to convey the V2X policy and parameters (including service authorization) from AMF to UE and to convey the UE's V2X capability and PC5 capability for V2X information from UE to AM F.
- N2: In the case of V2X service, it is used to convey the V2X policy and parameters (including service authorization) from AMF to NG-RAN.
- Uu: The reference point between the UE and the NG-RAN.

Proximity services (ProSe) 5G UE-to-Network relay is described.

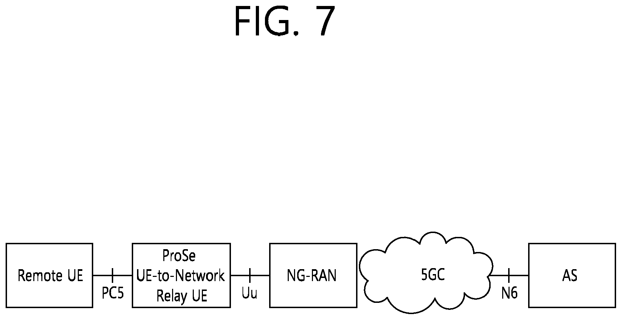

FIG. 7 shows an example of an architecture model using a ProSe 5G UE-to-Network Relay entity to which implementations of the present disclosure is applied.

Referring to FIG. 7, the ProSe 5G UE-to-Network Relay entity (or, ProSe 5G UE-to-Network Relay UE, or simply ProSe UE-to-Network Relay entity/UE, UE-to-Network Relay entity/UE) provides the functionality to support connectivity to the network for remote UEs. The ProSe 5G UE-to-Network Relay may be used for both public safety services and commercial services (e.g., interactive service).

A UE is considered to be a remote UE for a certain ProSe UE-to-Network Relay entity, if it has successfully established a PC5 link to this ProSe 5G UE-to-Network Relay entity. A remote UE may be located within NG-RAN coverage or outside of NG-RAN coverage.

The ProSe 5G UE-to-Network Relay entity relays unicast traffic (UL and DL) between the remote UE and the network. The ProSe UE-to-Network Relay entity provides generic function that can relay any Internet protocol (IP), Ethernet or unstructured traffic.
- For IP traffic over PC5 reference point, the ProSe UE-to-Network Relay entity uses IP type PDU session towards 5GC.
- For Ethernet traffic over PC5 reference point, the ProSe UE-to-Network Relay entity may use Ethernet type PDU session or IP type PDU session towards 5GC.
- For unstructured traffic over PC5 reference point, the ProSe UE-to-Network Relay entity may use unstructured type PDU session or IP type PDU session (i.e., IP encapsulation/de-capsulation by UE-to-Network Relay entity) towards 5GC.

The type of traffic supported over PC5 reference point is indicated by the ProSe UE-to-Network Relay (e.g., using the corresponding relay service code). The UE-to-Network Relay entity determines the PDU session type based on, e.g., ProSe policy/parameters, UE route selection policy (URSP) rule, relay service code, etc.

IP type PDU session and Ethernet type PDU session may be used to support more than one remote UEs, while unstructured type PDU Session may be used to support only one remote UE.

One-to-one direct communication is used between remote UEs and ProSe 5G UE-to-Network Relay entities for unicast traffic.

Hop-by-hop security is supported in the PC5 link and Uu link. If there are requirements beyond hop-by-hop security for protection of remote UE's traffic, security over PDU layer needs to be applied.

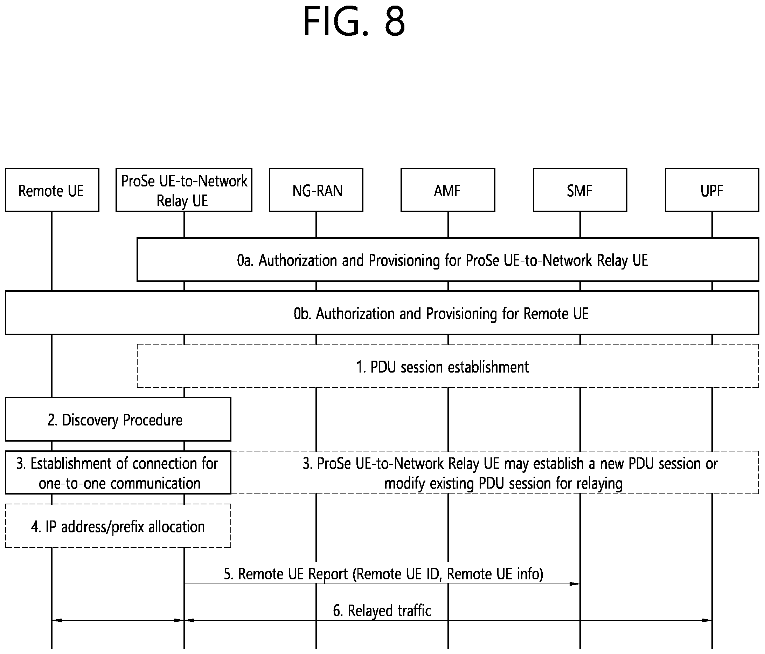

FIG. 8 shows an example of a procedure for ProSe 5G UE-to-Network Relay to which implementations of the present disclosure is applied.

A ProSe 5G UE-to-Network Relay capable UE may register to the network (if not already registered) and establish a PDU session enabling the necessary relay traffic. Or, it may need to connect to additional PDU session(s) or modify the existing PDU session in order to provide relay traffic towards remote UE(s). PDU session(s) supporting ProSe 5G UE-to-Network Relay is only be used for remote UE(s) relay traffic.

Step 0: During the registration procedure, authorization and provisioning for the ProSe UE-to-Network Relay UE (step 0a) and authorization and provisioning for the remote UE (step 0b) are performed.

Step 1: The ProSe UE-to-Network Relay UE may establish a PDU session for relaying with default PDU session parameters received in step 0 or pre-configured in the ProSe UE-to-Network Relay UE (e.g., single network slice selection assistance information (S-NSSAI), data network name (DNN), session and service continuity (SSC) mode or PDU session type). In case of IP PDU session type and IPv6, the ProSe UE-to-Network Relay UE obtains the IPv6 prefix via prefix delegation function from the network.

Step 2: Based on the authorization and provisioning in step 0, the remote UE performs discovery of a ProSe UE-to-Network Relay UE. As part of the discovery procedure the remote UE learns about the connectivity service the ProSe UE-to-Network Relay UE provides.

Step 3: The remote UE selects a ProSe UE-to-Network Relay UE and establishes a connection for one-to-one ProSe direct communication.

If there is no PDU session satisfying the requirements of the PC5 connection with the remote UE, e.g., S-NSSAI, DNN, quality of service (QoS), the ProSe UE-to-Network Relay UE initiates a new PDU session establishment or modification procedure for relaying.

According to the PDU session type for relaying, the ProSe UE-to-Network Relay UE performs relaying function at the corresponding layer. For example, the ProSe UE-to-Network Relay UE acts as an IP router when the traffic type is IP, acts as an Ethernet switch when the traffic type is Ethernet, and performs generic forwarding for unstructured traffic.

When the ProSe UE-to-Network Relay UE uses unstructured PDU session type for unstructured traffic over PC5 reference point, it creates a mapping between the PC5 link ID and the PDU Session ID, and a mapping between the PC5 L2 link and the QoS flow ID (QFI) for the PDU session.

When the ProSe UE-to-Network Relay UE uses IP PDU session type for Ethernet or unstructured traffic over PC5 reference point, it locally assigns an IP address/prefix for the remote UE and use that to encapsulate the data from the remote UE. For DL traffic, the ProSe UE-to-Network Relay UE decapsulates the traffic from the IP headers and forwards to the corresponding remote UE via PC5 reference point.

Step 4: For IP PDU session type and IP traffic over PC5 reference point, IPv6 prefix or IPv4 address is allocated for the remote UE. From this point, the UL and DL relaying may start. For DL traffic forwarding, the PC5 QoS rule is used to map the DL IP packet to the PC5 QoS flow. For UL traffic forwarding, the 5G QoS rule is used to map the UL IP packet to the Uu QoS flow.

Step 5: The ProSe UE-to-Network Relay UE sends a Remote UE Report (remote user ID, remote UE info) message to the SMF for the PDU session associated with the relay. The remote user ID is an ID of the remote UE user (provided via user info) that was successfully connected in step 3. The remote UE info is used to assist identifying the remote UE in the 5GC. For IP PDU session type, the remote UE info is remote UE IP info. For Ethernet PDU session type, the remote UE info is remote UE MAC address which is detected by the ProSe UE-to-Network Relay UE. For unstructured PDU session type, the remote UE info contains the PDU session ID. The SMF stores the remote user IDs and the related remote UE info (if available) in the ProSe UE-to-Network Relay UE's SM context for this PDU session associated with the relay.

For IP info the following principles apply.
- for IPv4, the ProSe UE-to-Network Relay UE reports transmission control protocol (TCP)/user datagram protocol (UDP) port ranges assigned to individual remote UE(s) (along with the remote user ID).
- for IPv6, the ProSe UE-to-Network Relay UE reports IPv6 prefix(es) assigned to individual remote UE(s) (along with the remote user ID).

The Remote UE Report message is sent when the remote UE disconnects from the ProSe UE-to-Network Relay UE (e.g., upon explicit layer-2 link release or based on the absence of keep alive messages over PC5) to inform the SMF that the remote UE(s) have left.

In the case of registration update procedure involving SMF change, the remote user IDs and related remote UE info corresponding to the connected remote UEs are transferred to the new SMF as part of SM context transfer for the ProSe UE-to-Network Relay UE.

In order for the SMF to have the remote UE(s) information, the home public land mobile network (HPLMN) and the visited PLMN (VPLMN) where the ProSe UE-to-Network Relay UE is authorized to operate, needs to support the transfer of the remote UE related parameters in case the SMF is in the HPLMN.

After being connected to the ProSe UE-to-Network Relay UE, the remote UE keeps performing the measurement of the signal strength of PC5 unicast link with the ProSe UE-to-Network Relay UE for relay reselection.

The procedure disclosed in FIG. 8 may also work when the ProSe UE-to-Network Relay UE connects in evolved packet system (EPS) using LTE.

In the ProSe UE-to-Network Relay, there is a possibility that the PC5 security policy applied to the PC5 unicast link between the remote UE and the UE-to-Network Relay UE is different from the Uu security policy applied to the Uu link between the UE-to-Network Relay UE and the network. If the security policies applied to the two links are different and do not align, one may be security-enabled and the other may be security-unenabled, exposing the entire communication link to security risks, which could be a source of security vulnerabilities.

For example, in the case of UL traffic relaying, the PC5 unicast link may be secured, but the Uu link may not be. In this case, UL traffic transmitted from a remote UE in encrypted form on the PC5 unicast link and may be exposed to the outside world by being transferred in plain text on the Uu link.

As another example, in the case of DL traffic relaying, the Uu link may be secured, but the PC5 unicast link may not be. In this case, DL traffic transmitted from a network in encrypted form on the Uu link may be exposed to the outside world by being transferred in plain text on the PC5 unicast link.

Therefore, there is a need for a method to determine how to apply security when the security policies between the PC5 unicast link and the Uu link are different in UE-to-Network Relay.

According to implementations of the present disclosure, a relay communication channel through a UE-to-Network Relay UE may be enabled only if the security policies applied on the PC5 unicast link and the Uu link are aligned with each other.

According to implementations of the present disclosure, the UE-to-Network Relay UE may determine the security policy to be applied to the PC5 unicast link with the remote UE. If a PDU session for relaying already exists on the Uu link prior to the creation of the PC5 unicast link, the UE-to-Network Relay UE may compare the security policy applied to the PC5 unicast link with the security policy applied to the PDU session on the Uu link and, if the security policies of the two links do not match, may request the SMF to modify the existing PDU session. If a PDU session for relaying does not exist on the Uu link prior to the creation of the PC5 unicast link, the UE-to-Network Relay UE may request the SMF to establish a new PDU session.

According to implementations of the present disclosure, when the UE-to-Network Relay UE requests the SMF to establish a new PDU session for relaying and/or modify an existing PDU session, it may transmit to the SMF the security policy applied to the PC5 unicast link. The SMF may determine that the received security policy applied to the PC5 unicast link is consistent with the corresponding application policy, and may determine that the NG-RAN is capable of supporting the corresponding security policy, and may accept the establishment of a new PDU session and/or the modification of an existing PDU session.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

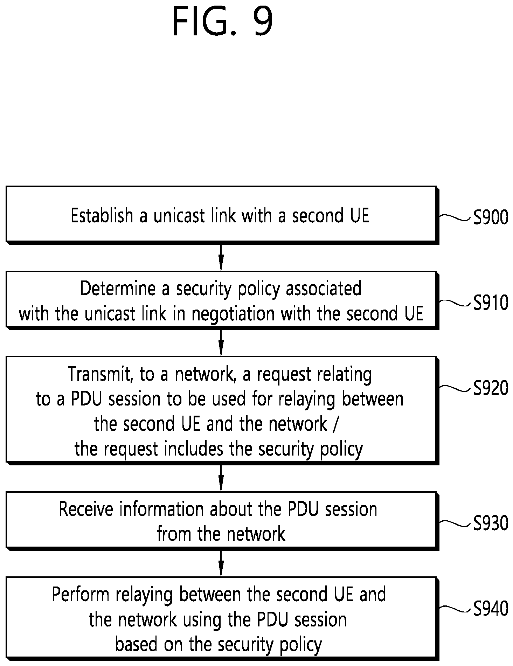

FIG. 9 shows an example of a method performed by a first UE to which implementations of the present disclosure is applied.

In step S900, the method comprises establishing a unicast link with a second UE.

In step S910, the method comprises determining a security policy associated with the unicast link in negotiation with the second UE.

In step S920, the method comprises transmitting, to the network, a request relating to a PDU session to be used for relaying between the second UE and the network. The request includes the security policy.

In some implementations, based on the PDU session not having been created, the request relating to the PDU session may include requesting the creation of the PDU session. That is, if a PDU session for UE-to-Network Relay has not yet been created, the creation of the PDU session may be requested.

In some implementations, based on the PDU session already being created, the request relating to the PDU session may request modification of the PDU session. That is, if a PDU session for UE-to-Network Relay has already been created, modification of the PDU session may be requested.

In some implementations, the security policy associated with the unicast link may be compared to the security policy associated with the PDU session. If the security policy associated with the unicast link and the security policy associated with the PDU session are different from each other, a modification of the PDU session may be requested. For example, when the security policy associated with the PDU session is "On", the security policy associated with the unicast link may be either "Not needed" or "Preferred (Off)". For example, when the security policy associated with the PDU session is "Off", the security policy associated with the unicast link may be either "Required" or "Preferred (On)".

In step S930, the method comprises receiving information about the PDU session from the network.

In step S940, the method comprises performing relaying between the second UE and the network using the PDU session based on the security policy.

In some implementations, the security policy may be supported by a RAN node of the network and allowed by an SMF of the network.

In some implementations, the first UE may communicate with at least one of a mobile device, a network, and/or an autonomous vehicle different from the first UE.

Furthermore, the method in perspective of the first UE described above in FIG. 9 may be performed by the first wireless device 100 shown in FIG. 2, the wireless device 100 shown in FIG. 3, and/or the UE 100 shown in FIG. 4.

More specifically, the first UE comprises at least one transceiver, at least one processor, and at least one memory operably connectable to the at least one processor. The at least one memory stores instructions to cause the at least one processor to perform operations below.

The first UE establishes a unicast link with a second UE.

The first UE determines a security policy associated with the unicast link in negotiation with the second UE.

The first UE transmits, to the network, a request relating to a PDU session to be used for relaying between the second UE and the network. The request includes the security policy.

In some implementations, based on the PDU session not having been created, the request relating to the PDU session may include requesting the creation of the PDU session. That is, if a PDU session for UE-to-Network Relay has not yet been created, the creation of the PDU session may be requested.

In some implementations, based on the PDU session already being created, the request relating to the PDU session may request modification of the PDU session. That is, if a PDU session for UE-to-Network Relay has already been created, modification of the PDU session may be requested.

In some implementations, the security policy associated with the unicast link may be compared to the security policy associated with the PDU session. If the security policy associated with the unicast link and the security policy associated with the PDU session are different from each other, a modification of the PDU session may be requested. For example, when the security policy associated with the PDU session is "On", the security policy associated with the unicast link may be either "Not needed" or "Preferred (Off)". For example, when the security policy associated with the PDU session is "Off", the security policy associated with the unicast link may be either "Required" or "Preferred (On)".

The first UE receives information about the PDU session from the network.

The first UE performs relaying between the second UE and the network using the PDU session based on the security policy.

In some implementations, the security policy may be supported by a RAN node of the network and allowed by an SMF of the network.

Furthermore, the method in perspective of the first UE described above in FIG. 9 may be performed by control of the processor 102 included in the first wireless device 100 shown in FIG. 2, by control of the communication unit 110 and/or the control unit 120 included in the wireless device 100 shown in FIG. 3, and/or by control of the processor 102 included in the UE 100 shown in FIG. 4.

More specifically, a processing apparatus operating in a wireless communication system comprises at least one processor, and at least one memory operably connectable to the at least one processor. The at least one processor is adapted to perform operations comprising: establishing a unicast link with another UE, determining a security policy associated with the unicast link in negotiation with the another UE, generating a request relating to a PDU session to be used for relaying between the another UE and the network, and obtaining information about the PDU session. The request includes the security policy.

Furthermore, the method in perspective of the first UE described above in FIG. 9 may be performed by a software code 105 stored in the memory 104 included in the first wireless device 100 shown in FIG. 2.

The technical features of the present disclosure may be embodied directly in hardware, in a software executed by a processor, or in a combination of the two. For example, a method performed by a wireless device in a wireless communication may be implemented in hardware, software, firmware, or any combination thereof. For example, a software may reside in RAM, flash memory, ROM, EPROM, EEPROM, registers, hard disk, a removable disk, a CD-ROM, or any other storage medium.

Some example of storage medium may be coupled to the processor such that the processor can read information from the storage medium. In the alternative, the storage medium may be integral to the processor. The processor and the storage medium may reside in an ASIC. For other example, the processor and the storage medium may reside as discrete components.

The computer-readable medium may include a tangible and non-transitory computer-readable storage medium.

For example, non-transitory computer-readable media may include RAM such as synchronous dynamic random access memory (SDRAM), ROM, non-volatile random access memory (NVRAM), EEPROM, flash memory, magnetic or optical data storage media, or any other medium that can be used to store instructions or data structures. Non-transitory computer-readable media may also include combinations of the above.

In addition, the method described herein may be realized at least in part by a computer-readable communication medium that carries or communicates code in the form of instructions or data structures and that can be accessed, read, and/or executed by a computer.

According to some implementations of the present disclosure, a non-transitory computer-readable medium (CRM) has stored thereon a plurality of instructions.

More specifically, CRM stores instructions to cause at least one processor to perform operations. The operations comprise: establishing a unicast link with another UE, determining a security policy associated with the unicast link in negotiation with the another UE, generating a request relating to a PDU session to be used for relaying between the another UE and the network, and obtaining information about the PDU session. The request includes the security policy.

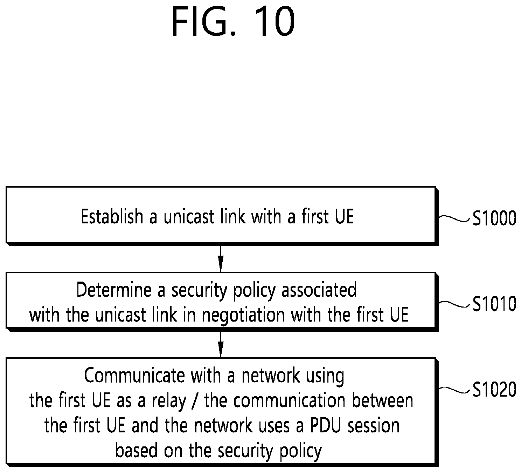

FIG. 10 shows an example of a method performed by a second UE to which implementations of the present disclosure is applied.

In step S1000, the method comprises establishing a unicast link with a first UE.

In step S1010, the method comprises determining a security policy associated with the unicast link in negotiation with the first UE.

In step S1020, the method comprises communicating with a network using the first UE as a relay.

The communication between the first UE and the network uses a PDU session based on the security policy.

Furthermore, the method in perspective of the second UE described above in FIG. 10 may be performed by the second wireless device 200 shown in FIG. 2, the wireless device 200 shown in FIG. 3, and/or the UE 100 shown in FIG. 4.

More specifically, the second UE comprises at least one transceiver, at least one processor, and at least one memory operably connectable to the at least one processor. The at least one memory stores instructions to cause the at least one processor to perform operations below.

The second UE establishes a unicast link with a first UE.

The second UE determines a security policy associated with the unicast link in negotiation with the first UE.

The second UE communicates with a network using the first UE as a relay.

The communication between the first UE and the network uses a PDU session based on the security policy.

Furthermore, the method in perspective of the second UE described above in FIG. 10 may be performed by control of the processor 202 included in the second wireless device 200 shown in FIG. 2, by control of the communication unit 110 and/or the control unit 120 included in the wireless device 200 shown in FIG. 3, and/or by control of the processor 102 included in the UE 100 shown in FIG. 4.

More specifically, a processing apparatus operating in a wireless communication system comprises at least one processor, and at least one memory operably connectable to the at least one processor. The at least one processor is adapted to perform operations comprising: establishing a unicast link with another UE, determining a security policy associated with the unicast link in negotiation with the another UE, and communicating with a network using the another UE as a relay. The communication between the another UE and the network uses a PDU session based on the security policy.

Furthermore, the method in perspective of the second UE described above in FIG. 10 may be performed by a software code 205 stored in the memory 204 included in the second wireless device 200 shown in FIG. 2.

More specifically, CRM stores instructions to cause at least one processor to perform operations. The operations comprise: establishing a unicast link with another UE, determining a security policy associated with the unicast link in negotiation with the another UE, and communicating with a network using the another UE as a relay. The communication between the another UE and the network uses a PDU session based on the security policy.

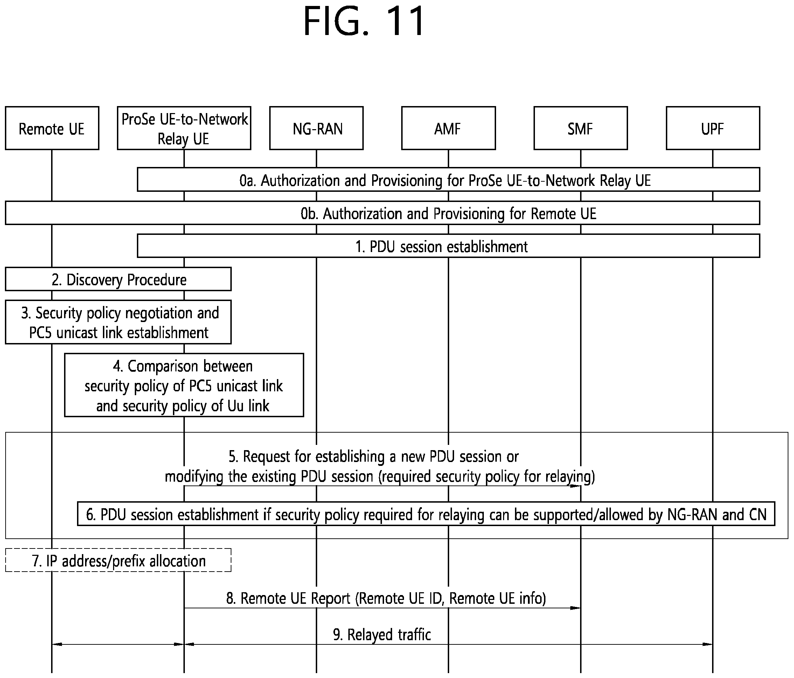

FIG. 11 shows an example of a method for applying a security policy for UE-to-Network Relay to which implementations of the present disclosure is applied.

Step 0: During the registration procedure, authorization and provisioning for the UE-to-Network Relay UE (step 0a) and authorization and provisioning for the remote UE (step 0b) are performed. At this time, PC5 security policy used to establish PC5 unicast link may be provisioned together.

Step 1: The UE-to-Network Relay UE may pre-establish a PDU session for future UE-to-Network Relay with default PDU session parameters received in step 0 or pre-configured in the UE-to-Network Relay UE (e.g., S-NSSAI, DNN, SSC mode or PDU session type).

Step 2: Based on the authorization and provisioning in step 0, the remote UE performs discovery of a UE-to-Network Relay UE discovery.

Step 3: As a result of the UE-to-Network Relay UE discovery, the remote UE discovers and selects the UE-to-Network Relay UE, and establishes a PC5 unicast link for one-to-one direct communication between the remote UE and the UE-to-Network Relay UE. Further, the remote UE and the UE-to-Network Relay UE negotiate a PC5 security policy that may be applied to the PC5 unicast link, based on the PC5 security policy provided in step 0. For example, the PC5 security policy may correspond to any one of "Required", "Not needed", or "Preferred". In this case, "Preferred" means that the security policy negotiated for the PC5 unicast link is preferred, and the UE-to-Network Relay UE may apply the corresponding security policy ("Preferred(On)") or not ("Preferred(Off)").

Step 4: The UE-to-Network Relay UE performs comparison between the security policy applied to the PDU session created in step 1 (PDU session security policy) with the security policy that may be applied to the PC5 unicast link negotiated with the remote UE in step 3 (PC5 security policy). Table 3 shows an example of the comparison between the security policy applied to the PDU session and the security policy that may be applied to the PC5 unicast link.

**[Table 3]**

| Case | PC5 security policy | PDU session security policy | Comparison |
|---|---|---|---|
| A | Required | On | Pass |
| B | Required | Off | Fail |
| C | Not needed | On | Fail |
| D | Not needed | Off | Pass |
| E | Preferred(On) | On | Pass |
| F | Preferred(On) | Off | Fail |
| G | Preferred(Off) | On | Fail |
| H | Preferred (Off) | Off | Pass |

Referring to Table 3, the comparison results for each case may be derived as follows.
- Case A: Security is applied to both the PC5 unicast link and the PDU session (Required/On), so the comparison passes.
- Case B: Security is applied to the PC5 unicast link (Required) but not applied to the PDU session (Off), so the comparison fails (security threat occurs on the Uu interface for UL traffic).
- Case C: Security is not applied to PC5 unicast links (Not needed), but applied to the PDU sessions (On), so the comparison fails (security threat occurs on the PC5 interface for DL traffic).
- Case D: Security is not applied to both the PC5 unicast link and the PDU session (Not needed/Off), so the comparison passes.
- Case E: Security is preferred on the PC5 unicast link and the UE-to-Network Relay UE has decided to apply the PC5 security policy (Preferred (On)) and security is applied to the PDU session (On), so the comparison passes.
- Case F: Security is preferred on the PC5 unicast link and the UE-to-Network Relay UE has decided to apply the PC5 security policy (Preferred (On)), but security is not applied to the PDU session (Off), so the comparison fails (security threat occurs on the Uu interface for UL traffic).
- Case G: Security is preferred on the PC5 unicast link and the UE-to-Network Relay UE has decided not to apply the PC5 security policy (Preferred (Off)), but security is applied to the PDU session (On), so the comparison fails (security threat occurs on the PC5 interface for DL traffic).
- Case H: Security is preferred on the PC5 unicast link and the UE-to-Network Relay UE has decided not to apply the PC5 security policy (Preferred (Off)) and security is not applied to the PDU session (Off), so the comparison passes.

For cases B, C, F, and G above (i.e., comparison result fails), the UE-to-Network Relay UE may determine that the PDU session security policy and the PC5 security policy are mis-aligned. Accordingly, the UE-to-Network Relay UE may determine that a new PDU session for UE-to-Network Relay needs to be established and/or an existing PDU session needs to be modified, and steps 5 and 6 described below may be performed.

For cases A, D, E, and H above (i.e., the comparison result passes), the UE-to-Network Relay UE may determine that the PDU session security policy and the PC5 security policy are aligned. Accordingly, step 7 may be performed directly without performing steps 5 and 6 as described below.

Also, a PDU session for future UE-to-Network Relay has not been pre-created in step 1, step 5 may be performed directly without performing step 4.

Step 5: If no PDU session has been created for UE-to-Network Relay, the UE-to-Network Relay UE requests the SMF to create a new PDU session. Or, if no PDU session has passed the comparison performed in step 4, the UE-to-Network Relay UE requests the SMF to create a new PDU session and/or modify the configurations of an existing PDU session. The request message for the creation of a new PDU session and/or the modification of an existing PDU session (e.g., PDU session establishment request message) may include an indication that the corresponding PDU session will be used for UE-to-Network Relay and/or the PC5 security policy applied to the PC5 unicast link. The PC5 security policy applied to the PC5 unicast link may be the security policy required for the PDU session. That is, the security policy required for the PDU session may be aligned with the PC5 security policy applied to the PC5 unicast link.

Step 6: The SMF determines whether the received PC5 security policy is supportable in the NG-RAN and/or acceptable in the core network, and if so, proceeds to establish and/or modify the PDU session. If the received PC5 security policy is not supportable in the NG-RAN and/or acceptable in the core network, the SMF may reject the PDU session establishment and/or modification request with an appropriate reject cause.

Step 7: For IP PDU session type and IP traffic over PC5 reference point, IPv6 prefix or IPv4 address is allocated for the remote UE. From this point, the UL and DL relaying may start. For DL traffic forwarding, the PC5 QoS rule is used to map the DL IP packet to the PC5 QoS flow. For UL traffic forwarding, the 5G QoS rule is used to map the UL IP packet to the Uu QoS flow.

Step 8: The UE-to-Network Relay UE sends a Remote UE Report (remote user ID, remote UE info) message to the SMF for the PDU session associated with the relay. Accordingly, the UE-to-Network Relay UE may indicate that the corresponding PDU session is intended for UE-to-Network Relay. The remote user ID is an ID of the remote UE user (provided via user info) that was successfully connected in step 3. The remote UE info is used to assist identifying the remote UE in the 5GC. For IP PDU session type, the remote UE info is remote UE IP info. For Ethernet PDU session type, the remote UE info is remote UE MAC address which is detected by the UE-to-Network Relay UE. For unstructured PDU session type, the remote UE info contains the PDU session ID. The SMF stores the remote user IDs and the related remote UE info (if available) in the ProSe UE-to-Network Relay UE's SM context for this PDU session associated with the relay.

Step 9: The UE-to-Network Relay communication via the UE-to-Network Relay UE is performed. The UE-to-Network Relay UE performs the relay function for data traffic between the remote UE and the network.

The present disclosure can have various advantageous effects.

For example, in ProSe communication between a remote UE and a network via a UE-to-Network Relay UE, the same security policy is applied to both the PC5 unicast link and the Uu link, resulting in more secure communication.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method performed by a first user equipment (UE) operating in a wireless communication system, the method comprising:
establishing a unicast link with a second UE;
determining a security policy associated with the unicast link in negotiation with the second UE;
transmitting, to a network, a request relating to a protocol data unit (PDU) session to be used for relaying between the second UE and the network, wherein the request includes the security policy;
receiving information about the PDU session from the network; and
performing relaying between the second UE and the network using the PDU session based on the security policy.

2. The method of claim 1, wherein, based on the PDU session not having been created, the request relating to the PDU session requests creation of the PDU session.

3. The method of claim 1, wherein, based on the PDU session already being created, the request relating to the PDU session requests modification of the PDU session.

4. The method of claim 3, wherein the method further comprises comparing the security policy associated with the unicast link to a security policy associated with the PDU session.

5. The method of claim 4, wherein, based on the security policy associated with the unicast link and the security policy associated with the PDU session being different from each other, modification of the PDU session is requested.

6. The method of claim 5, wherein, based on the security policy associated with the PDU session being "On", the security policy associated with the unicast link is either "Not needed" or "Preferred (Off)".

7. The method of claim 5, wherein, based on the security policy associated with the PDU session being "Off", the security policy associated with the unicast link is either "Required" or "Preferred (On)".

8. The method of claim 1, wherein the security policy is supported by a radio access network (RAN) node of the network, and allowed by a session management function (SMF) of the network.

9. The method of claim 1, wherein the first UE is in communication with at least one of a mobile device, a network, and/or autonomous vehicles other than the first UE.

10. A first user equipment (UE) operating in a wireless communication system, the first UE comprising:
at least one transceiver;
at least one processor; and
at least one memory operably connectable to the at least one processor and storing instructions that, based on being executed by the at least one processor, perform operations comprising:
establishing a unicast link with a second UE;
determining a security policy associated with the unicast link in negotiation with the second UE;
transmitting, to a network, a request relating to a protocol data unit (PDU) session to be used for relaying between the second UE and the network, wherein the request includes the security policy;
receiving information about the PDU session from the network; and
performing relaying between the second UE and the network using the PDU session based on the security policy.

11. The first UE of claim 10, wherein, based on the PDU session not having been created, the request relating to the PDU session requests creation of the PDU session.

12. The first UE of claim 10, wherein, based on the PDU session already being created, the request relating to the PDU session requests modification of the PDU session.

13. The first UE of claim 12, wherein the operations further comprise comparing the security policy associated with the unicast link to a security policy associated with the PDU session.

14. The first UE of claim 13, wherein, based on the security policy associated with the unicast link and the security policy associated with the PDU session being different from each other, modification of the PDU session is requested.

15. A processing apparatus operating in a wireless communication system, the processing apparatus comprising:
at least one processor; and
at least one memory operably connectable to the at least one processor,
wherein the at least one processor is adapted to perform operations comprising:
establishing a unicast link with another UE;
determining a security policy associated with the unicast link in negotiation with the another UE;
generating a request relating to a protocol data unit (PDU) session to be used for relaying between the another UE and a network, wherein the request includes the security policy; and
obtaining information about the PDU session.

16. A non-transitory computer readable medium (CRM) storing instructions that, based on being executed by at least one processor, perform operations comprising:
establishing a unicast link with another UE;
determining a security policy associated with the unicast link in negotiation with the another UE;
generating a request relating to a protocol data unit (PDU) session to be used for relaying between the another UE and a network, wherein the request includes the security policy; and
obtaining information about the PDU session.

17. A method performed by a second user equipment (UE) operating in a wireless communication system, the method comprising:
establishing a unicast link with a first UE;
determining a security policy associated with the unicast link in negotiation with the first UE; and
communicating with a network using the first UE as a relay,
wherein the communication between the first UE and the network uses a PDU session based on the security policy.

18. A second user equipment (UE) operating in a wireless communication system, the first UE comprising:
at least one transceiver;
at least one processor; and
at least one memory operably connectable to the at least one processor and storing instructions that, based on being executed by the at least one processor, perform operations comprising:
establishing a unicast link with a first UE;
determining a security policy associated with the unicast link in negotiation with the first UE; and
communicating with a network using the first UE as a relay,
wherein the communication between the first UE and the network uses a PDU session based on the security policy.

19. A processing apparatus operating in a wireless communication system, the processing apparatus comprising:
at least one processor; and
at least one memory operably connectable to the at least one processor,
wherein the at least one processor is adapted to perform operations comprising:
establishing a unicast link with another UE;
determining a security policy associated with the unicast link in negotiation with the another UE; and
communicating with a network using the another UE as a relay,
wherein the communication between the another UE and the network uses a PDU session based on the security policy.

20. A non-transitory computer readable medium (CRM) storing instructions that, based on being executed by at least one processor, perform operations comprising:
establishing a unicast link with another UE;
determining a security policy associated with the unicast link in negotiation with the another UE; and
communicating with a network using the another UE as a relay,
wherein the communication between the another UE and the network uses a PDU session based on the security policy.
